(19) Europäisches Patentamt
European Patent Office
Office européen des brevets

(11) EP 0 545 943 B1

(12) **EUROPÄISCHE PATENTSCHRIFT**

(45) Veröffentlichungstag und Bekanntmachung des Hinweises auf die Patenterteilung:
**23.04.1997 Patentblatt 1997/17**

(21) Anmeldenummer: **91912178.0**

(22) Anmeldetag: **28.06.1991**

(51) Int. Cl.$^6$: **B01D 47/06**, B01D 53/34

(86) Internationale Anmeldenummer:
**PCT/AT91/00077**

(87) Internationale Veröffentlichungsnummer:
**WO 93/00147 (07.01.1993 Gazette 1993/02)**

(54) **VERFAHREN ZUR ABTRENNUNG VON FESTEN UND/ODER FLÜSSIGEN UND/ODER GASFÖRMIGEN TEILCHEN AUS EINEM GASSTROM UND ANLAGE ZUR DURCHFÜHRUNG DES VERFAHRENS**

PROCESS AND PLANT FOR SEPARATING SOLID AND/OR LIQUID AND/OR GASEOUS PARTICLES FROM A GAS STREAM

PROCEDE ET SYSTEME DE SEPARATION DE PARTICULES SOLIDES ET/OU LIQUIDES ET/OU GASEAUX CONTENUS DANS UN COURANT DE GAS

(84) Benannte Vertragsstaaten:
**AT BE CH DE DK ES FR GB GR IT LI LU NL SE**

(43) Veröffentlichungstag der Anmeldung:
**16.06.1993 Patentblatt 1993/24**

(73) Patentinhaber:
- **VOEST-ALPINE Industrieanlagenbau GmbH**
  **A-4020 Linz (AT)**
- **VOEST-ALPINE Stahl Linz GmbH**
  **A-4031 Linz (AT)**

(72) Erfinder:
- **AUER, Werner**
  **A-4040 Linz (AT)**
- **GEBERT, Walter**
  **A-4502 St. Marien (AT)**
- **PARZERMAIR, Franz**
  **A-4800 Attnang-Puchheim (AT)**
- **FÜRSCHUSS, Harald**
  **A-4481 Asten (AT)**
- **RAPTIS, Sotirios**
  **A-4040 Linz (AT)**

(74) Vertreter: **Itze, Peter, Dipl.-Ing. et al**
**Patentanwälte**
**Casati, Wilhelm, Dipl.-Ing.**
**Itze, Peter, Dipl.-Ing.**
**Krause Ernst, Dipl.-Ing.,**
**Amerlingstrasse 8**
**1061 Wien (AT)**

(56) Entgegenhaltungen:
**EP-A- 0 337 073**
**WO-A-90/05015**
**DE-A- 1 088 926**
**DE-A- 3 329 638**
**DE-A- 3 918 452**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 545 943 B1

Printed by Rank Xerox (UK) Business Services
2.14.2/3.4

## Beschreibung

Die Erfindung betrifft ein Verfahren zur Abtrennung von festen und/oder flüssigen und/oder gasförmigen Teilchen aus einem Gasstrom unter Einsatz einer in den Gasstrom eingebrachten, mittels einer gasförmigen Phase feinst geteilten Waschflüssigkeit, sowie eine Anlage zur Durchführung des Verfahrens.

Große technische Probleme treten bei der Abtrennung von Feinststaub mit einer Korngröße von weniger als 0,5 μm auf. Staubpartikel dieser Größe entstehen bei den verschiedensten technischen Prozessen, u.zw. kaum aufgrund von Zerkleinerungsvorgängen, sondern vielmehr durch einen Aufbau aus der Gasphase, über Kondensation, Koagulation und/oder durch Desublimation.

Chemische Analysen von nach einer herkömmlichen Entstaubung in Abgas verbleibendem Sinterstaub haben gezeigt, daß er zu einem sehr hohen Grad aus Alkalisalzen bestehen kann, die sich wahrend des Sinterprozesses aus der Gasphase bilden. Dieser hohe Anteil an Salzaerosolen führt zu einer sehr großen Feinheit des Staubes, wobei der Staub einen hohen Anteil an Teilchen aufweist, welche einen aerodynamischen Durchmesser von weniger als O,2 μm haben.

Aus der Literatur ist bekannt, daß für einen Korngrößenbereich von 0,1 bis 0,3 μm ein Abscheideminimum vorliegt, da mit abnehmender Teilchengröße die Trägheitskräfte überproportional abnehmen und die Diffusionskräfte noch nicht wirksam genug sind.

Größere Probleme treten auch auf, wenn im kontinuierlichen Betrieb erhebliche Unterschiede in Konzentration, Menge und physikalisch-chemischen Eigenschaften der Aerodispersion auftreten.

Neben den herkömmlichen Trockenfiltern hat sich vor allem die Naßentstaubung zur Abtrennung von Feinstäuben, sowie flüssigen und gasförmigen Schadstoffen als zielführend erwiesen.

Die Wirkungsweise des Naßreinigers besteht darin, daß die Schadstoffe beim Waschen von der Aerodispersion in eine Flüssigphase eingebunden werden. Ursache für diese Verschiebung der Schadstoffe in die Flüssigphase sind Trägheitskräfte und Diffusionskräfte, sowie ev. elektrische Kräfte.

Bei herkömmlichen Verfahren, wie sie in der DE-OS 37 14 749 und in der DE-PS 27 46 975 beschrieben sind, werden zum in Kontakt bringen von Staub und Wassernebeltröpfchen Rohre verwendet, die zur Erhöhung der Fließgeschwindigkeit des Rohgases Querschnittsverengungen, wie z.B. eine Venturistrecke aufweisen. In diesem Rohrstück oder unmittelbar anschließend wird eine Reinigungsflüssigkeit zugesetzt, wobei durch die starke Verwirbelung bei der Druckänderung das Gasstromes eine innige Durchmischung zwischen Gas und Nebeltröpfchen entsteht.

Die Nachteile bestehen im hohen Druckverlust, weshalb der Energieaufwand steigt und in der äußerst kurzen Kontaktzeit (< 0,4 s), wodurch der Fraktionsabscheidegrad negativ beeinflußt wird.

Die US-PS 4,067,703 offenbart einen Naßentstauber, bei welchem die Wasch- bzw. Sprühzone im wesentlichen aus einer Rohrleitung besteht, die in ihrem Durchmesser und ihrer Länge so ausgelegt ist, daß sich eine ausgebildete Rohrturbulenz sowie eine verhältnismäßig lange Verweilzeit für den Kontakt zwischen Feststoffpartikeln und Waschwassertropfen einstellt. Das Waschwasser wird mittels einer Düse sehr fein in dem zu entstaubenden Gasstrom verteilt. Das mit Staub beladene Waschwasser wird in einem Abscheider abgetrennt, der um ein Zentrifugalgebläse herum aufgebaut ist, und welcher ein Tauchrohr für den Schlammwasserablauf aufweist.

Diese Düse ist im Gasstrom angeordnet, wobei zwischen der Düse und dem Gebläse eine minimale Distanz eingehalten werden muß, damit der Sprühkegel den Innenraum des Rohres komplett ausfüllt. Als Beispiel gibt diese US-PS ein Verhältnis von Abstand Düse zu Gebläse:Rohrdurchmesser = 5 : 1 an. Bei Einsatz von Zweistoffdüsen (Druckluft/Wasser) sind dabei Tropfengrößen zwischen 5 und 100 μm erreichbar, wobei der größte Anteil zwischen 10 und 30 μm durchmißt.

Der Sprühzone schließt sich das Niederdruckgebläse an, welches nicht nur zur Förderung des Staub-Gas-Gemisches dient, sondern den Kontaktraum für die Impaktion der Staubpartikel über den Bereich der Zweistoffdüse hinaus erweitert. Gleichzeitig soll dieses Gebläse die Koagulation der Wassertropfen begünstigen. Der mit dem Wasser gesammelte Staub läuft innerhalb des Gebläses durch ein Tauchrohr mit Wasserverschluß in ein Schlammbecken ab.

Die für diesen Naßentstauber gemessenen Trennkurven (siehe Fig. 6 der US-PS) besitzen bei ca. 0,4 μm Teilchengröße ein Minimum. Dies deutet darauf hin, daß es Staubteilchen gibt, die zum einen für Trägheitseffekte zu klein und zum anderen für Diffusionseffekte zu groß sind.

Dieser Entstauber weist daher folgende Nachteile auf:

- der Betrieb ist nur mit Reinwasser möglich, dadurch entsteht eine hohe Abwasserfracht
- es wird ein Ventilator zur Förderung der Abgase benötigt
- der Gasdurchsatz ist begrenzt, da eine freie Abgasmengenänderung auf Grund des geforderten Drehzahlbereiches des Ventilators nicht möglich ist
- die Materialfestigkeit unterliegt einer hohen Belastung durch Korrosion bzw. durch Erosion
- die Flexibilität im Gas- bzw. im Stauodurchsatz ist gering
- der Druckverlust ist hoch.

Die DE-AS 25 20 957 beschreibt ein Verfahren zur Reinigung von Sinterabgasen, wobei ein erster Teilstrom der Abgase mit einem geringen Gehalt an gas- oder dampfförmigen Schadstoffen aus Windkästen unter dem ersten und letzten Teil der Sintermaschine gesammelt und in einer ersten elektrostatischen Gasreinigung von Staub weitgehend befreit wird. Ein zweiter Teilstrom mit einer höheren Schadstoffbelastung wird aus den dazwischen liegenden Windkästen abgezogen und in einer zweiten elektrostatischen Gasreinigung vom Staub befreit, dann in einer Gaswäsche von Schadgas bzw. -dampf befreit und dann über einen Kamin in die Atmosphäre abgelassen.

Diese Kombination hat jedoch folgende Nachteile:

Wie Versuche der Erfinder mit der bekannten Anlage zeigten, weist die Fraktionsabscheidegradkurve bei einem Teilchendurchmesser von O,2 µm ein deutliches Minimum auf.

Durch die getrennte Sammlung, Ableitung und Reinigung von zwei verschieden stark beladenen Abgasströmen entsteht ein erheblicher Mehraufwand an apparativen Einrichtungen.

Bei der Ausbildung gemäß der DE-A1 39 18 452 sind zwei übereinander in einem vertikalen Strömungsbereich angeordnete Spaltdüsen vorgesehen, die einen horizontalen Sprühnebel erzeugen sollen, der sich mit den aufgenommenen Verunreinigungen an der Innenwandung der Wandung niederschlagen und abrinnen soll. Eine solche Ausbildung hat den Nachteil, daß die Strömungsgeschwindigkeit der Abgase sehr genau eingestellt werden muß, da es sonst auf Grund des Druckabfalles des Flüssigkeitsnebels leicht dazu kommen kann, daß im Bereich der Innenwandung der Nebel sehr dünn oder gar nicht mehr vorhanden ist, wodurch in diesem Bereich eine nur mangelhafte oder überhaupt fehlende Reinigung vorliegt. Außerdem ist nur eine Einbringstelle der Waschflüssigkeit vorhanden, so daß z.B. bei lokalen Verkrustungen oder Verlegungen des Spaltes ganze Sektoren des Abgasstromes ohne Reinigung bleiben.

Aufgabe der vorliegenden Erfindung ist es, neben einer Gasreinigung vor allem extrem feinkörnige Partikel mit einer Korngröße von kleiner 1 µm aus einem Gasstrom abzuscheiden, wobei der Fraktionsabscheidegrad im beobachtbaren Korngrößenbereich ab 0,01 µm kein oder nur ein vernachlässigbar geringes Minimum aufweist.

Ferner ist es Aufgabe der Erfindung, über den Energieaufwand einen optimalen Abscheidegrad flexibel zu steuern.

Erfindungsgemäß wird diese Aufgabe dadurch gelöst, daß die Waschflüssigkeit an mehreren in einer quer bzw. im wesentlichen quer zur Richtung des Gasstromes liegenden Ebene über den gesamten Gasstromquerschnitt verteilt angeordneten Stellen in den Gasstrom eingetragen wird, und jede Stelle unabhängig voneinander sowohl mit Zerstäubungsgas als auch mit Waschflüssigkeit gesondert angespeist wird. Dadurch wird erreicht, daß über den gesamten Gasstrom gleichmäßig eine entsprechende Menge an Waschflüssigkeit eingebracht wird, wobei Waschflüssigkeit und Zerstäubungsgas an jeder Einbringstelle genau eingeregelt werden kann.

Vorteilhafterweise kann die Menge an Zerstäubungsgas bzw. die Menge an Waschflüssigkeit in Abhängigkeit von der Korngrößenverteilung der Schadstoffe eingestellt werden, d.h. daß aufgrund des Verhältnisses zwischen Zerstäubungsgas und Waschflüssigkeit die Größe der Waschflüssigkeitspartikel und deren Anzahl den durch die Korngrößenverteilung gegebenen Erfordernissen entsprechend eingestellt werden kann. Weiters können mehrere Ebenen zum Eintrag der Waschflüssigkeit nacheinander angeordnet sein, wodurch eine noch genauere Steuerung des Abscheidens erzielt wird.

Der Abscheidemechanismus funktioniert dabei folgendermaßen:

Die Schadstoffe und der gesättigte Gasstrom gelangen in den Bereich der ersten Düsenebene, wo die Feinpartikel mit einem Wasserfilm ummantelt werden. Dies wird durch eine Thermophorese (im Düsenbereich kommt es zu einer weiteren Unterkühlung des Gasstromes, wodurch eine Übersättigung auftritt), durch eine Trägheitsabscheidung (größere Partikel prallen auf die Tropfen auf und treten durch die Wucht des Aufprallens in die flüssige Phase ein) bzw. durch turbulente Diffusion bewirkt. Durch den eventuellen Einbau einer zweiten Düsenebene können die aus der ersten Behandlungszone austretenden agglomerierten Partikel vor allem durch Trägheitseffekte nachgereinigt werden. Um die nötige Verweilzeit des Gasstromes in der Waschzone zu erreichen, kann während des Waschens die Strömungsgeschwindigkeit des Gases auf maximal 5 m/s. gehalten werden. Außerdem wird der Druckverlust innerhalb dieser Zone sehr gering gehalten. Um eine erste Vergrößerung der im Gasstrom enthaltenen Aerosole zu erreichen, kann der zu reinigende Gasstrom vor dem Einbringen der Waschflüssigkeit mit Flüssigkeit gesättigt werden. Weiters kann der Gasstrom zwischen dem Sättigen mit Flüssigkeit und dem Waschen ionisiert werden, wodurch aufgrund der vorhandenen Teilchenladung die Beaufschlagung mit Waschflüssigkeit mit geringerem energetischen Aufwand erfolgen kann. Um die Belastung des Vorfluters mit Waschflüssigkeit so gering wie möglich zu halten, kann die Waschflüssigkeit im Kreis geführt werden, wobei in der Waschflüssigkeit enthaltene Feststoffe innerhalb des Kreislaufes sedimentiert werden. Der Gasstrom kann mit Flüssigkeit vor dem Waschengesättigt werden, wobei die Sättigungstemperatur des Gasstromes etwa 40 - 70°C beträgt.

Bei einer vorteilhaften Anlage zur Durchführung des erfindungsgemäßen Verfahrens, bei welcher ein mit Zweistoffdüsen bestückter Gaswäscher vorgesehen ist, sind erfindungsgemäß die Zweistoffdüsen in einer normal bzw. im wesentlichen normal zur Gasströmungsrichtung liegenden Ebene über den gesamten Wäscherquerschnitt verteilt angeordnet, wobei jede der Zweistoffdüsen bzw. jede Düsenlanze getrennt mit Zuführungsleitungen für Zerstäubungsgas und Waschflüssigkeit verbunden ist. Dadurch wird die bereits angeführte gleichmäßige Verteilung der Waschflüssigkeitspartikel über den gesamten Querschnitt des Gasstromes erreicht.

Vorteilhafterweise kann dem Gaswäscher eine an sich bekannte Quenche vorgeschaltet sein, wodurch erreicht wird, daß einerseits die Sättigungstemperatur des Gasstromes auf 40 - 70°C eingestellt wird und anderseits eine völlige Feuchtigkeitssättigung des Gasstromes erreicht wird. Zum Einbringen der Coulomb'schen Kräfte bei der Ionisation kann zwischen Quenche und Gaswäscher eine Ionisationsstufe zwischengeschaltet sein, in welcher mehrere Sprühlektroden und als Gegenpol mehrere Niederschlagselektroden vorgesehen sind. Weiters können im Gaswäscher nach der ersten Ebene von Zweistoffdüsen weitere Ebenen von Zweistoffdüsen angeordnet sein. Aufgrund der unterschiedlichen Geschwindigkeit des Gasstromes und der Düsenaustrittsströmung und der damit verbundenen Druckuntersehiede kommt es außerhalb des Bereiches der Düsenströmung zu einer Rückströmung (Impulserhalt). Dies bewirkt einen hohen Grad an Turbulenzen, weshalb jener Teil des Gasstromes, welcher in einer sogenannten Totströmung zwischen zwei benachbarten Düsen bzw. zwischen Düse und Rohrinnenwand hindurchtritt, ohne dabei von der Düsenströmung erfaßt zu werden, umgeleitet wird und nochmals durch den Düsenbereich hindurchgehen muß. Das heißt, daß der von den Düsen im ersten Durchlauf nicht erfaßte Gasstrom größtenteils im zweiten Kreislauf geführt wird, bis er durch die Düsenströmungskernzone in Richtung der zweiten Düsenebene gelangt, wo dann eine erhöhte Agglomeration der Schadstoffe bzw. Aerosole erreicht wird. Diese zweite Düsenebene wird im Bedarfsfall mit geringerer Düsenaustrittsgeschwindigkeit betrieben, wodurch größere Tropfendurchmesser der Waschflüssigkeit auftreten, die dann aufgrund der Trägheitseffekte eine besonders gute Nachreinigung nach der ersten Düsenzone ergeben. Der für die Abscheidung wirksame Bereich einer Düsenebene erstreckt sich je nach Wäschergeometrie und Gasstromgeschwindigkeit von der Düsenebene bis etwa 1,5 m danach in Fließrichtung des Gasstromes. Der Abstand der Düsen in jeder Ebene ist variabel. Dabei wird jede dieser Düsen oder jede Gruppe von Düsen getrennt mit Zerstäubungsgas einerseits und Kreislaufflüssigkeit anderseits angespeist, sodaß eine größtmögliche Anpaßbarkeit an die jeweils gegebenen Gasreinigungsbedingungen erzielt wird. Durch eine Erhöhung des Flüssigkeitsdurchsatzes durch die Düsen wird der Bedarf an Zerstäubungsgas reduziert, wodurch eine Änderung der Größe und der Anzahl der Tröpfchen erreicht wird. Dadurch kann in Abhängigkeit von der Kornverteilung, der Staubbeladung , der Abscheidegrad über die Zerstäubungsgasmenge bzw. Flüssigkeitsmenge für die Düsen entsprechend gesteuert werden. Dazu können in jeder Düsenebene mehrere Düsenlanzen angeordnet sein, an welchen eine oder mehrere Zweistoffdüsen angeordnet sind.

Mit der erfindungsgemäßen Anlage kann ein beliebig großes Volumen des Gasstromes je Zeiteinheit gereinigt werden. Das einzig limitierende Element ist dabei nur das Raumangebot, was besonders beim Nachrüsten bestehender Anlagen Bedeutung erlangen kann. Selbstverständlich sind auch Konstruktionen mit mehr als zwei parallelen Düsenebenen möglich. Welche Bauart in jedem einzelnen Fall dann zur Anwendung kommt, hängt von der Art des zu reinigenden Gasstromes und von der Wirtschaftlichkeit ab.

In der Zeichnung ist ein Ausführungsbeispiel des Erfindungsgegenstandes dargestellt.

Fig. 1 zeigt schematisch die erfindungsgemäße Anlage. Die
Fig. 2 - 4 sind Diagramme, aus welchen der Einfluß des Verhältnisses von Zerstäubungsgas zu Waschflüssigkeit hervorgeht.

Bei dem in Fig. 1 wiedergegebenen Gaswäscher wird über die Rohgaszuleitung 1 gegebenenfalls grob vorgereinigtes Rohgas zugeleitet, welches in eine Quenche 2 eintritt. In der Quenche 2 ist eine Flüssigkeitseinsprühung 3 vorgesehen, mittels welcher das Rohgas auf eine Sättigungstemperatur von 40 - 70 °C gebracht wird und das Rohgas mit Flüssigkeit gesättigt wird. Der in der Flüssigkeit bereits festgehaltene Grobstaub wird in einem Tropfenabscheider 4 abgeschieden und über einen Grobauslauf 5 abgeführt. Das Rohgas gelangt dann in eine Ionisationsstufe 6, in welcher über eine Sprühelektrode 7 Spannung zu einer Niederschlagselektrode 8 geleitet wird. Innerhalb dieser Ionisationsstufe herrscht eine Hochspannung in der Größenordnung zwischen 30 und 100 kV. Die Niederschlagselektrode ist hier als Rohr angedeutet, kann jedoch in gleicher Weise Waben- oder Plattenform aufweisen. Diese Ionisationsstufe ermöglicht eine Verringerung des spezifischen Energiebedarfes um etwa 30 %. Nach dieser Ionisierungsbehandlung erreicht das Rohgas den eigentlichen Gaswäscher 9, welcher vorwiegend als zylinderförmiger Bauteil ausgebildet ist und welcher von dem Rohgas in vertikaler Richtung von oben nach unten durchströmt wird. In dem Gaswäscher 9 sind Zweistoffdüsen in einer ersten Ebene angeordnet, welche über die Leitungen 12 von einer Pumpe 14 mit Waschflüssigkeit und über die Leitungen 13 mit Zerstäubungsmedium beaufschlagt sind. Den Sprühdüsen 1O ist eine weitere Ebene mit Sprühdüsen 11 nachgeschaltet, welche hinsichtlich der Beaufschlagung den Düsen 10 parallelgeschaltet sind, daß also das Reinwasser über die Leitungen 12 und das Zerstäubungsmedium über die Leitungen 13 zugeleitet wird. Diese Zuleitungen sind in Fig. 1 nur ganz schematisch angedeutet. Vielmehr ist in der genauen Ausbildung jede einzelne Düse bzw. jede einzelne Düsenebene oder Gruppen von Düsen in der Ebene über gesonderte Leitungen 12 bzw. gesonderte Leitungen 13 beaufschlagbar, u.zw. derart, daß jede Düse eine eigene Wasserzuleitung und eine eigene Gaszuleitung aufweist. In nicht dargestellter Weise können diese Düsen 10 bzw. 11 an Düsenlanzen angeordnet sein, wobei je Düsenlanze eine oder mehrere Zweistoffdüsen vorhanden sind. Nach Durchlaufen des Gaswäschers wird das gereinigte Gas über die Reingasableitung 15 abgeführt und durch einen weiteren Tropfenabscheider 16 hindurchgeführt. Die mit den Feinstpartikeln beladenen Flüssigkeitspartikel aus dem Tropfenabscheider treten über die Leitung 17 in ein Sedimentationsbecken 18 ein, in welchem eine Trennwand 21 vorgesehen ist, mittels welcher das mit Verunreinigungen beladene Wasser von sedimentierbaren Teilchen befreit wird. Die über die Trennwand 21 überfließende reine Flüssigkeit wird über eine Leitung 19 der Pumpe 14 zur Rückführung in die Leitung 12 zugeleitet. Der sich am Boden des Sedimentationsbeckens 18 ansammelnde Schlammanteil wird über einen Schlammauslaß 20 abgeführt. In dieses Sedimentationsbecken könnte gegebenenfalls auch die aus dem Tropfenabscheider 4 auslaufende Grobauslaufflüssigkeit zugeführt werden, wodurch ein weiterer Kreislauf der Waschflüssigkeit erfolgt. Ein Vorteil dieser Kreislaufflüssigkeitsführung besteht darin, daß die Menge an Abwasser, welche aus der Anlage abgezogen und gegebenenfalls einer nachträglichen Aufarbeitung unterzogen werden muß, gering gehalten sein kann. Durch das Führen des Wassers über einen Sedimentationsraum wird auch der Düsenverschleiß auf ein Minimum reduziert.

Die Regelung des Reinstaubgehaltes des Reingases erfolgt kontinuierlich über die Drehzahl der Flüssigkeitskreislaufpumpe 14 bzw. dem Düsenvordruck der Naßreiniger. Bei Installation eines Rohgasstaubmeßgerätes kann durch ein "Feed-Forward"-Signal, verarbeitet in einem Kaskadenregler, der Regelkreis beschleunigt werden.

In den Fig. 2 - 4 werden die Abscheidungskurven dargestellt, u.zw., wie schon angeführt, in Abhängigkeit vom Verhältnis zwischen Reinigungsflüssigkeit und Zerstäubungsgaszufuhr.

Die Betriebsparameter zu bei den durch die Kurven erfaßten Versuchen lauten dabei wie folgt:

Staubeintrag: bis 2000 mg/Nm$^3$ tr
Abgastemperatur vor Quenche: 120°C
Abgastemperatur nach Quenche: 55°C

$$L/G = 1\ l/Nm^3$$

Druckluft: 0,5 MPa absolut
Solekonzentration: 7 bis 25 g/l Chlorid
Abgasmenge: 15 000 Nm$^3$/ h f
Spez.Energiebedarf 4,5 kW/1000 Nm$^3$ f (ohne Ionisation)
Spez.Energiebedarf 3,0 kW/1000 Nm$^3$ f (mit Ionisation)

Wie aus den Fig. 3 und 4 hervorgeht, führt eine Verringerung des Zerstäubungsgasanteils, also eine Erhöhung der Kreislaufflüssigkeitsmenge, an den Düsen zu einer Reduzierung der Abscheideleistung der Feinststaubteile.

Die Vorteile des Systems in Stichworten:

- Fraktionsabscheideverlauf - über 90%ige Erfassung von festen und flüssigen Partikeln mit 0,1 bis 0,4 µm
- Funktionsweise mit Kreislaufflüssigkeit und damit Minimierung der Abwasserfracht
- Variable Abscheidegradregelung durch Variation der Düsenbeaufschlagung
- geringer Druckverlust (delta p < 709 Pa)
- bei aggressiven Stoffen Bauweise in korrosionsbeständigen Stoffen möglich
- gleichzeitige Abscheidung von gasförmigen Stoffen, wie beispielsweise HCl, HF, $SO_2$ etc. (in Abhängigkeit des pH-Wertes) möglich
- hoher Schadstoffabscheidegrad unabhängig von der Schadstoffbeschaffenheit und von der Schadstoffpartikelverteilung.

## Patentansprüche

1. Verfahren zur Abtrennung von festen und/oder flüssigen und/oder gasförmigen Teilchen aus einem Gasstrom unter Einsatz einer in den Gasstrom eingebrachten, mittels einer gasförmigen Phase feinst geteilten Waschflüssigkeit, dadurch gekennzeichnet, daß die Waschflüssigkeit an mehreren in einer quer bzw. im wesentlichen quer zur Richtung des Gasstromes liegenden Ebene über den gesamten Gasstromquerschnitt verteilt angeordneten Stellen in den Gasstrom eingetragen wird, und jede Stelle unabhängig voneinander sowohl mit Zerstäubungsgas als auch mit Waschflüssigkeit gesondert angespeist wird.

2. Verfahren nach Anspruch 1, dadurch gekennzeichnet, daß die Menge an Zerstäubungsgas bzw. die Menge an Waschflüssigkeit in Abhängigkeit von der Korngrößenverteilung der Schadstoffe eingestellt wird.

3. Verfahren nach Anspruch 1 oder 2, dadurch gekennzeichnet, daß mehrere Ebenen zum Eintrag der Waschflüssigkeit nacheinander angeordnet sind.

4. Verfahren nach einem der Ansprüche 1 bis 3, dadurch gekennzeichnet, daß während des Waschens die Strömungsgeschwindigkeit des Gases auf max. 5 m/s gehalten wird.

5. Verfahren nach einem der Ansprüche 1 bis 4, dadurch gekennzeichnet, daß der zu reinigende Gasstrom vor dem Einbringen der Waschflüssigkeit mit Flüssigkeit gesättigt wird.

6. Verfahren nach einem der Ansprüche 1 bis 5, dadurch gekennzeichnet, daß der Gasstrom zwischen dem Sättigen mit Flüssigkeit und dem Waschen ionisiert wird.

7. Verfahren nach einem der Ansprüche 1 bis 6, dadurch gekennzeichnet, daß die Waschflüssigkeit im Kreislauf geführt wird, wobei in der Waschflüssigkeit enthaltene Feststoffe innerhalb des Kreislaufes sedimentiert werden.

8. Verfahren nach Anspruch 5, dadurch gekennzeichnet, daß die Sättigungstemperatur 40°C bis 70°C beträgt.

9. Anlage zur Durchführung des Verfahrens nach einem der Ansprüche 1 bis 8, wobei ein mit Zweistoffdüsen bestückter Gaswäscher vorgesehen ist, dadurch gekennzeichnet, daß die Zweistoffdüsen (10) in einer normal bzw. im wesentlichen normal zur Gasströmungsrichtung liegenden Ebene über den gesamten Querschnitt des Wäschers (9) verteilt angeordnet sind, wobei jede der Zweistoffdüsen (10 bzw. 11) bzw. jede Düsenlanze getrennt mit Zuführungsleitungen (12 bzw. 13) für Zerstäubungsgas und Waschflüssigkeit verbunden ist.

10. Anlage nach Anspruch 9, dadurch gekennzeichnet, daß dem Gaswäscher(9) eine an sich bekannte Quenche (2) vorgeschaltet ist.

11. Anlage nach Anspruch 10, dadurch gekennzeichnet, daß zwischen Quenche (2) und Gaswäscher (9) eine Ionisationsstufe (6) zwischengeschaltet ist, in welcher mehrere Sprühelektroden (7) und als Gegenpol mehrere Niederschlagselektroden (8) vorgesehen sind.

12. Anlage nach einem der Ansprüche 9 bis 11, dadurch gekennzeichnet, daß im Gaswäscher (9) nach der ersten Ebene von Zweistoffdüsen (10) weitere Ebenen von Zweistoffdüsen (11) angeordnet sind.

13. Anlage nach einem der Ansprüche 9 bis 12, dadurch gekennzeichnet, daß in jeder Düsenebene mehrere Düsenlanzen angeordnet sind, an welchen eine oder mehrere Zweistoffdüsen (10 bzw. 11) angeordnet sind.

## Claims

1. A process for separating solid and/or liquid and/or gaseous particles from a gas stream using a washing liquid introduced into the gas stream and very finely dispersed by means of a gaseous phase, characterised in that the washing liquid is introduced into the gas stream at several points distributed over the entire gas stream cross-section in a plane lying perpendicularly or substantially perpendicularly to the direction of the gas stream, and in that all the points are independently supplied separately with both atomising gas and washing liquid.

2. A process according to claim 1, characterised in that the amount of atomising gas or the amount of washing liquid is adjusted in dependence on the pollutant grain size distribution.

3. A process according to claim 1 or claim 2, characterised in that several planes are arranged one after the other for introduction of the washing liquid.

4. A process according to any one of claims 1 to 3, characterised in that during washing the flow speed of the gas is kept at a maximum of 5 m/s.

5. A process according to any one of claims 1 to 4, characterised in that the gas stream to be cleaned is saturated with liquid before the introduction of the washing liquid.

6. A process according to any one of claims 1 to 5, characterised in that the gas stream is ionised between being saturated with liquid and being washed.

7. A process according to any one of claims 1 to 6, characterised in that the washing liquid is recirculated, solids contained in the washing liquid being sedimented during recirculation.

8. A process according to claim 5, characterised in that the saturation temperature is from 40°C to 70°C.

9. An installation for carrying out the process according to any one of claims 1 to 8, wherein a gas washer is provided which is equipped with two-fluid nozzles, characterised in that the two-fluid nozzles (10) are distributed over the entire cross-section of the washer (9) in a plane normal or substantially normal to the gas flow direction, each of the two-fluid nozzles (10 or 11) or each nozzle lance being separately connected to supply lines (12 and 13 repectively) for atomising gas and washing liquid.

10. An installation according to claim 9, characterised in that a quencher (2) known per se is connected upstream of the gas washer (9).

11. An installation according to claim 10, characterised in that an ionisation stage (6) is disposed between quencher (2) and gas washer (9), in which ionisation stage there are provided a plurality of emission electrodes (7) and, as the opposite pole, a plurality of collecting electrodes (8).

12. An installation according to any one of claims 9 to 11, characterised in that further planes of two-fluid nozzles (11) are arranged in the gas washer (9) downstream of the first plane of two-fluid nozzles (10).

**13.** An installation according to any one of claims 9 to 12, characterised in that a plurality of nozzle lances are arranged in each nozzle plane, on which nozzle lances there are arranged one or more two-fluid nozzles (10 or 11).

## Revendications

**1.** Procédé de séparation de particules solides et/ou liquides et/ou gazeuses d'un courant de gaz, par utilisation d'un liquide de lavage introduit dans le courant de gaz, très finement subdivisé au moyen d'une phase gazeuse, caractérisé en ce que le liquide de lavage est introduit dans le courant de gaz, en plusieurs points répartis dans un plan, s'étendant transversalement ou sensiblement transversalement à la direction du courant de gaz, sur toute la section transversale du courant de gaz, et chaque point est alimenté séparément, indépendamment les uns des autres, tant en gaz d'atomisation qu'en liquide de lavage.

**2.** Procédé selon la revendication 1, caractérisé en ce que la quantité de gaz d'atomisation ou la quantité de liquide de lavage est réglée en fonction de la distribution granulométrique des substances nocives.

**3.** Procédé selon la revendication 1 ou 2, caractérisé en ce que plusieurs plans sont disposés l'un après l'autre pour l'introduction du liquide de lavage.

**4.** Procédé selon l'une des revendications 1 à 3, caractérisé en ce que pendant le lavage la vitesse d'écoulement du gaz est maintenue à 5 m/s au maximum.

**5.** Procédé sel on l'une des revendications 1 à 4, caractérisé en ce que le courant de gaz à épurer est saturé de liquide, avant l'introduction du liquide de lavage.

**6.** Procéda selon l'une des revendications 1 à 5, caractérisé en ce que le courant de gaz est ionisé entre la saturation avec le liquide et le lavage.

**7.** Procédé selon l'une des revendications 1 à 6, caractérisé en ce que le liquide de lavage est recyclé, les matières solides contenues dans le liquide de lavage étant sédimentées à l'intérieur du circuit.

**8.** Procédé selon la revendication 5, caractérisé en ce que la température de saturation est comprise entre 40 °C et 70 °C.

**9.** Installation pour la mise en oeuvre du procédé selon l'une des revendications 1 à 8, dans laquelle est prévu un laveur de gaz équipé de buses à deux substances, caractérisée en ce que les buses à deux substances (10) sont réparties dans un plan normal ou sensiblement normal à la direction d'écoulement du gaz, sur toute la section transversale du laveur (9), chacune des buses à deux substances (10 ou 11) ou chaque lance de buses étant reliée séparément à des conduites d'alimentation (12 ou 13) pour le gaz d'atomisation et le liquide de lavage.

**10.** Installation selon la revendication 9, caractérisée en ce qu'un refroidisseur (2) connu en soi, est monté en amont du layeur de gaz (9).

**11.** Installation selon la revendication 10, caractérisée en ce qu'entre le redroidisseur (2) et le laveur de gaz (9) est inséré un étage d'ionisation (6), dans lequel sont prévues plusieurs électrodes d'émission (7) et comme contre-pôle, plusieurs électrodes de précipitation (8).

**12.** Installation selon l'une des revendications 9 à 11, caractérisée en ce que dans le laveur de gaz (9), après le premier plan de buses à deux substances (10), sont placés des plans de buses à deux substances (11).

**13.** Installation selon l'une des revendications 9 à 12, caractérisée en ce que dans chaque plan de buses sont placées plusieurs lances de buses sur lesquelles sont prévues une ou plusieurs buses à deux substances (10 ou 11).

Fig. 1

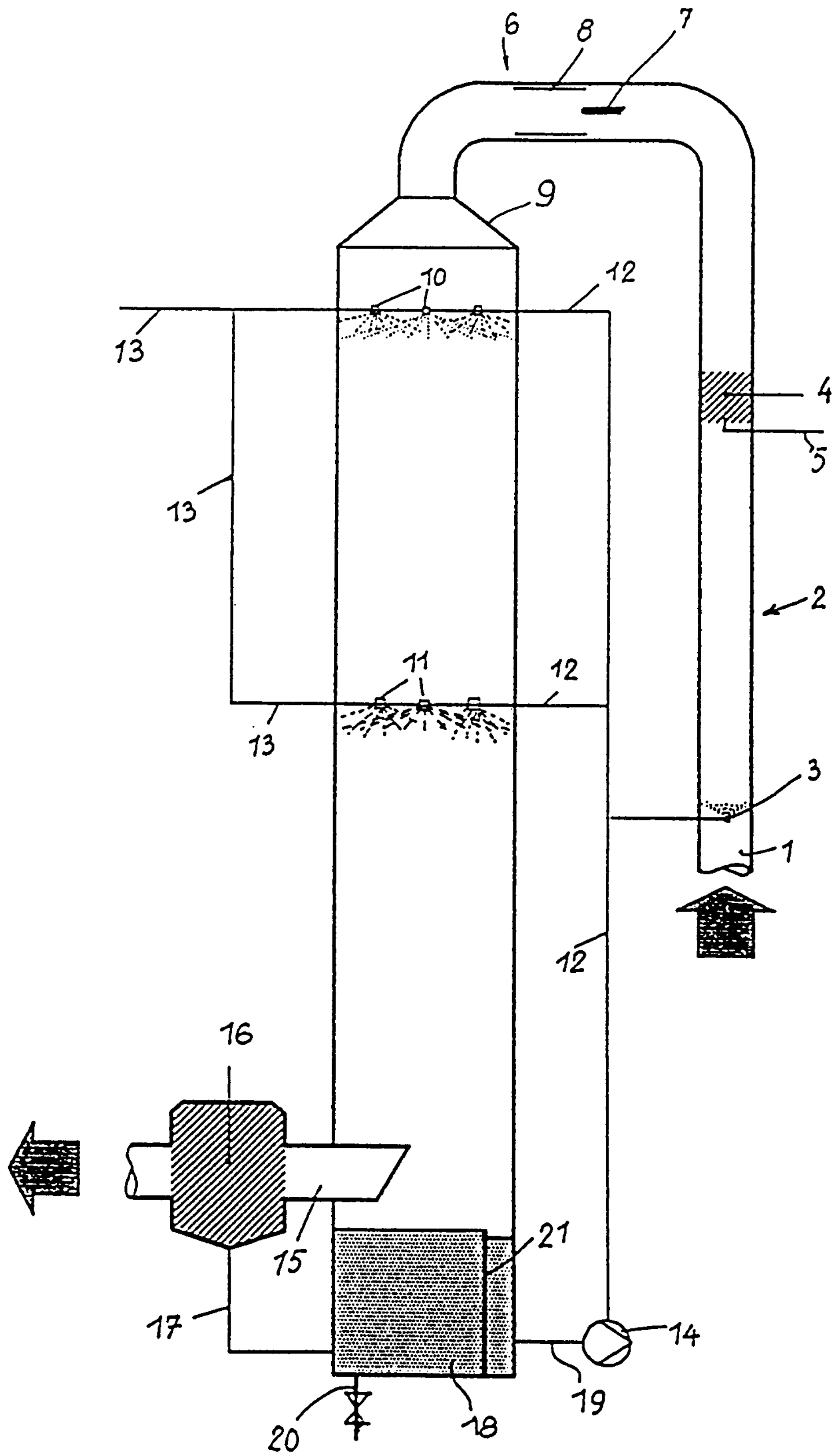

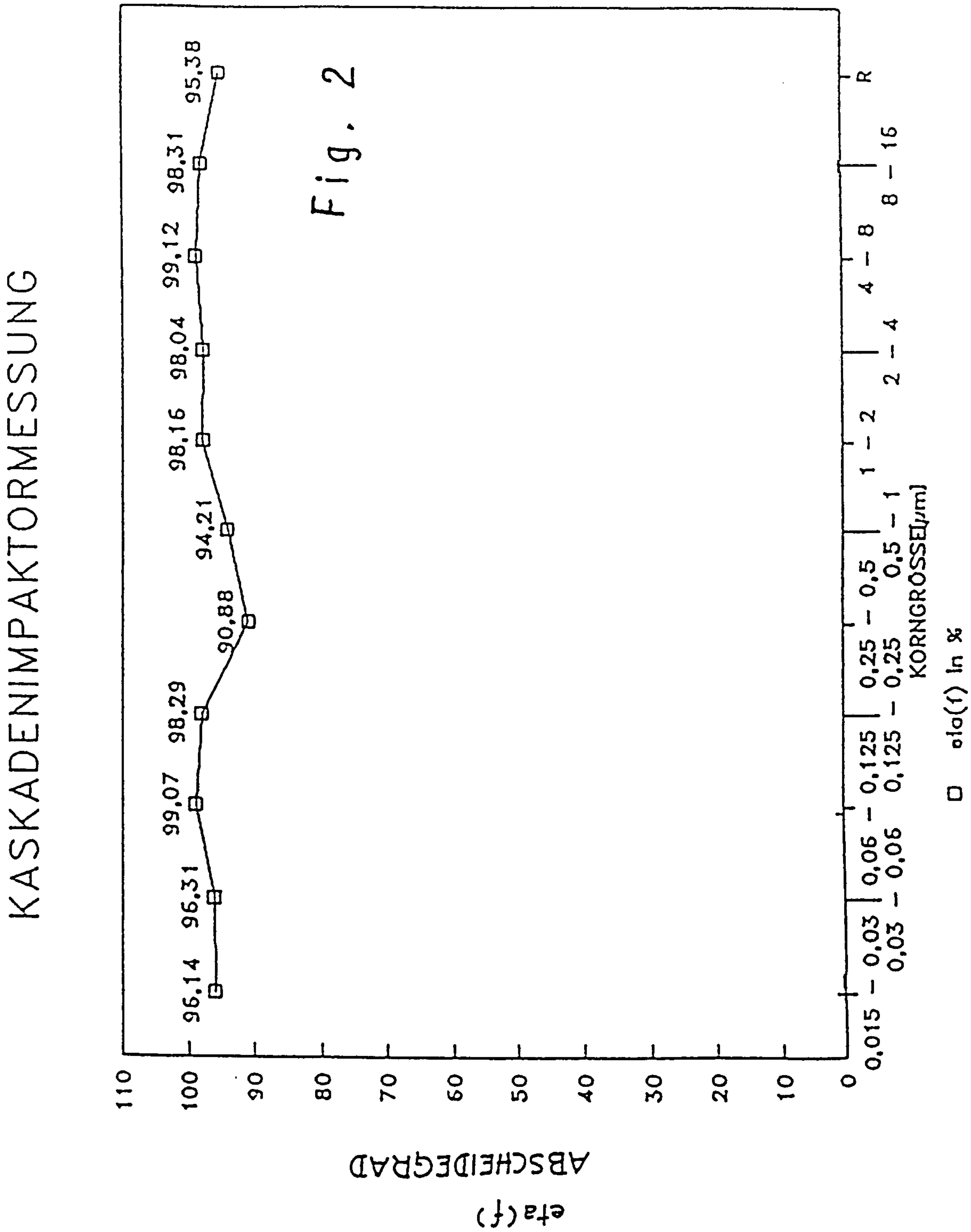
KASKADENIMPAKTORMESSUNG
ABSCHEIDEGRAD
eta(f)
KORNGROSSE[µm]
0
10
20
30
40
50
60
70
80
90
100
110
0,015 – 0,03
0,03 – 0,06
0,06 – 0,125
0,125 – 0,25
0,25 – 0,5
0,5 – 1
1 – 2
2 – 4
4 – 8
8 – 16
R
96,14
96,31
99,07
98,29
90,88
94,21
98,16
98,04
99,12
98,31
95,38

Fig. 2

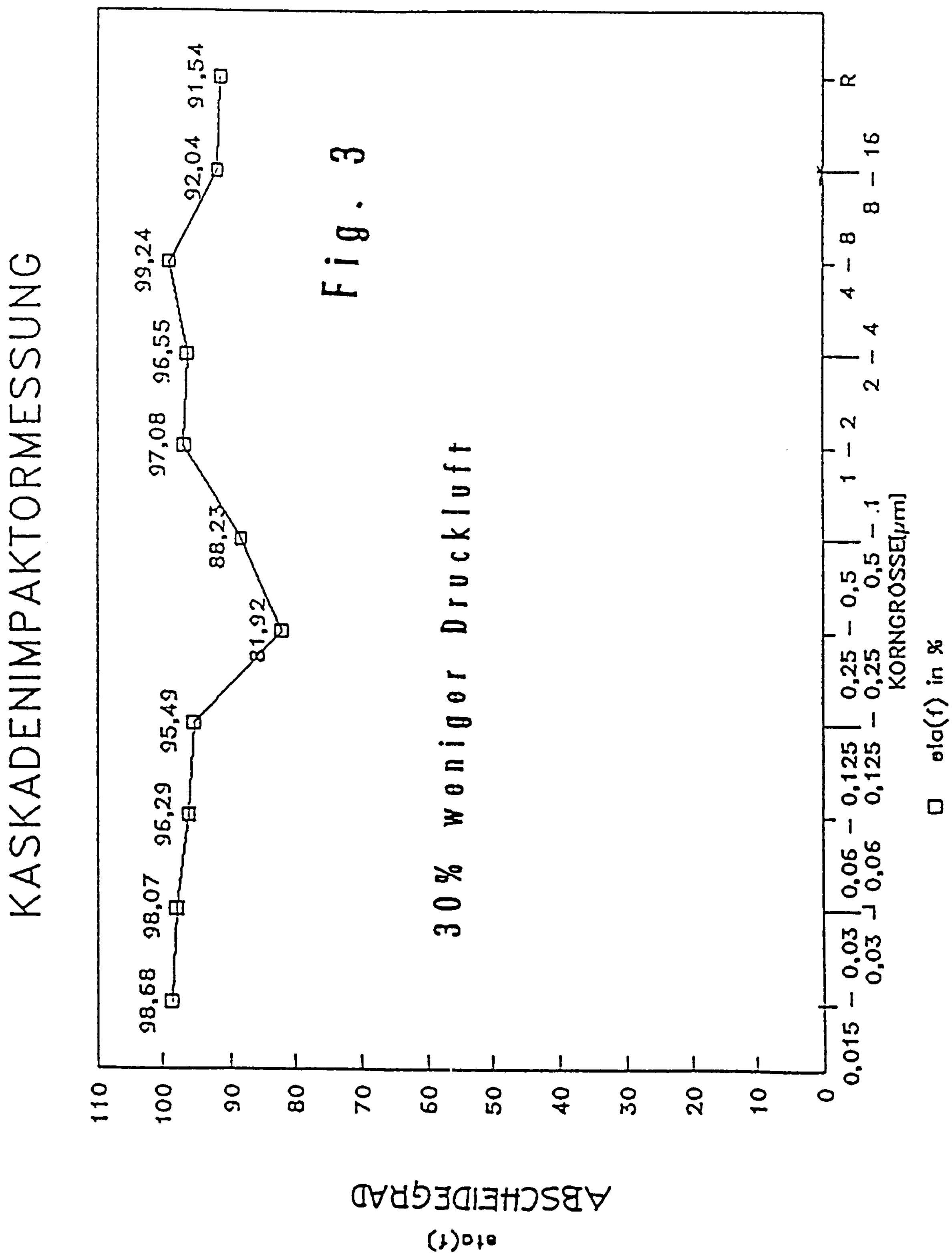
KASKADENIMPAKTORMESSUNG
30 % weniger Druckluft
ABSCHEIDEGRAD
eta(f)
0
10
20
30
40
50
60
70
80
90
100
110
98,68
98,07
96,29
95,49
81,92
88,23
97,08
96,55
99,24
92,04
91,54
0,015 – 0,03
0,03 – 0,06
0,06 – 0,125
0,125 – 0,25
0,25 – 0,5
0,5 – 1
1 – 2
2 – 4
4 – 8
8 – 16
R
KORNGRÖSSE[µm]
eta(f) in %

Fig. 3

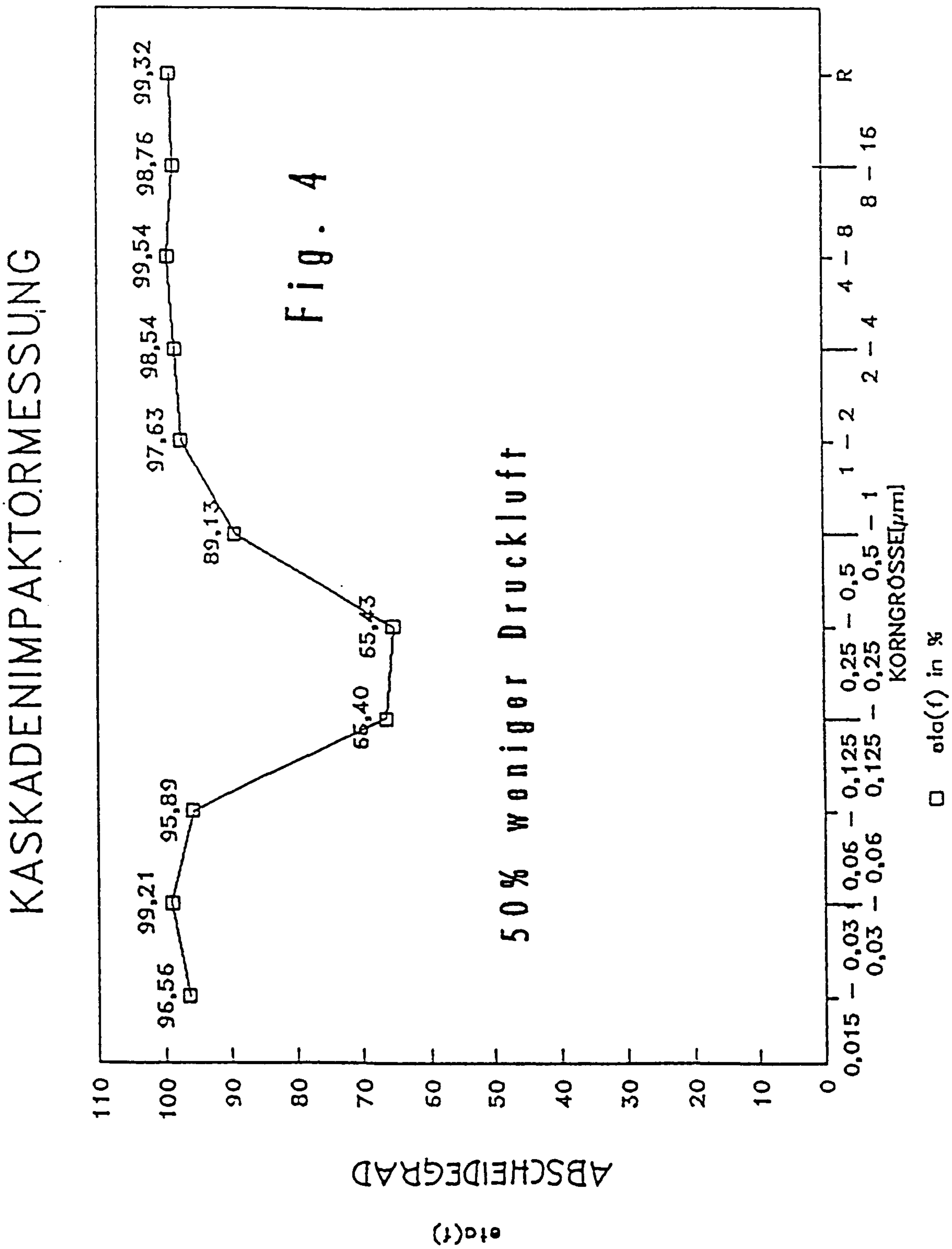
KASKADENIMPAKTORMESSUNG
Fig. 4
50% weniger Druckluft
96,56
99,21
95,89
66,40
65,43
89,13
97,63
98,54
99,54
98,76
99,32
ABSCHEIDEGRAD
eta(f)
110
100
90
80
70
60
50
40
30
20
10
0
0,015 – 0,03
0,03 – 0,06
0,06 – 0,125
0,125 – 0,25
0,25 – 0,5
0,5 – 1
1 – 2
2 – 4
4 – 8
8 – 16
R
KORNGROSSE[μm]
eta(f) in %